Europäisches Patentamt

European Patent Office

Office européen des brevets

(19)

(11) EP 1 300 980 A1

(12) EUROPEAN PATENT APPLICATION

(43) Date of publication:
09.04.2003 Bulletin 2003/15

(51) Int Cl.⁷: H04L 9/32

(21) Application number: 01480093.2

(22) Date of filing: 02.10.2001

(84) Designated Contracting States:
AT BE CH CY DE DK ES FI FR GB GR IE IT LI LU
MC NL PT SE TR
Designated Extension States:
AL LT LV MK RO SI

(71) Applicant: Institut Eurecom G.I.E.
06904 Sophia-Antipolis (FR)

(72) Inventors:
• Molva, Refik
  06560 Valbonne (FR)
• Michiardi, Pietro
  06600 Antibes (FR)

(74) Representative: Schuffenecker, Thierry
97, chemin de Cassiopée,
Domaine de l'étoile
06610 La Gaude (FR)

(54) **Process for providing non repudiation of receipt (NRR) in an electronic transaction environment**

(57)    A Non-Receipt Repudiation protocol between the emitter, the receiver and a Trusted Third Party (TTP) which is based on the transmission to the receiver of a first envelope which comprises an encrypted version of the message or document , a hash function of said message, and a Validation Certificate (VC) creating an unique link between said message M, said key K and said emitter. More specifically, the protocol involves the steps of transmitting a first envelope from the emitter to the receiver, said first envelope including a first, a second, a third, a fourth and a fifth element. The first element consists of an optional identifier (H1). The second element consists of an encrypted form of said document or message $[M]_k$. The third element consists of the hashing of said message M. The fourth element is formed by [K, h(M)] encrypted with the public key of the TTP. A fifth element consists of a Validation Certificate (VC) consisting of a signature of said emitter which is used for creating an unambiguous link between the original message M and the key K chosen and used by the originator for encrypting this message before the latter is transmitted to the recipient.

Originator constructs envelop with H1, [M]k , h(M), [K, h(M)]pkttp — 21

Transmit first envelop to Recipient — 22

Receiver checks and validates VC — 23

Receiver computes 2nd envelope — 24

Receiver transmits 2nd envelope to TTP server — 25

TTP validates VC — 26

TTP valides RC — 27

TTP transmits [K]skttp to receiver — 28

TTP transmits RC to Sender — 29

Fig. 2

EP 1 300 980 A1

**Description**

**Technical field of the invention**

The invention relates to communication systems and more particularly to a process for providing a Non Repudiation of Receipt (N.R.R.) in an electronic transaction environment.

**Background art**

The development of the electronic mail and, more generally, the electronic transactions throughout the Internet network, calls for a higher level of security for the transactions. The introduction of the signature process using the asymmetrical encryption mechanisms based on the couple of public/private keys substantially increases the security since it provides a secure solution to the problem of Non Repudiation of Origin (N.R.O.). That is, the emitter of an electronic document is given the possibility to affix to it his or her personal signature based on the use of his or her private key. An associated signature verification mechanism available to any party having the knowledge of the public key corresponding to this private key - e.g. a recipient receiving that document - permits to ascertain that latter actually comes from the true originator as it is supposed to be and, further prevents the latter from denying having created and transmitted that document.

While the problem of Non Repudiation of Origin (N.R.O.) has found an effective solution with the technique of signature recalled above, it is to be noted that another problem is still left open. This is the problem of Non Repudiation of Reception. In this situation the originator of one document transmits the latter to a given recipient and wishes to ascertaining that the recipient actually receives that document and further, wishes to receive an effective document or proof of evidence which can be used in case of dispute or litigation for instance. As for the problem of Non Repudiation of Origin, it is clear that such an evidence should comply with the two following properties:

1. The sender should be given the possibility to demonstrate that the recipient actually received the message or the document even in the case where the latter denies having received it.

2. The sender should be able to give that evidence only in the situation where the recipient actually received the message or the document.

Some researches were done for providing, more or less, a partial solution to the problem of Non Repudiation of Receipt (N.R.R.).

A known and basic technique consists in the use of an electronic form being associated to an electronic mail, which form is normally sent back to the emitter when the receiver receives and opens his/her mail. However, it should be observed that the return of the form is left to the good willing of the receiver, what shows to offer a very poor level of security for the originator of the document and, therefore, can not be considered as being satisfactory.

All techniques, which offer enhanced levels of security, involve a Trusted Third Party (T.T.P.) which permits to substantially secure the transaction or the mail between the emitter and the receiver. Two different groups of techniques are known:

In one group of known techniques, the TTP receives the message or the electronic document which is to be delivered to the receiver and it is the TTP which actually generates the acknowledgment or the certificate of delivery or the receipt of good delivery. A typical example of such a technique is shown in prior document "Practical protocols for certified electronic mail" by R. H. Deng, L. Gong, A. A. Lazar, and W. Wang, Journal of Network and Systems Management, 4(3), 1996 where there is disclosed an exchange of envelopes between the recipient and the TTP. The main drawback is that the encrypted version of the original version is enclosed within the envelope. Precisely, prior to the obtention of the clear-text message, the receiver has to send the whole ciphered message to the TTP. This is not convenient particularly when the receiver has a low speed connection to the network or the Internet network. Furthermore, the TTP has to process and to send the clear text copy of the message back to the receiver. This substantially increases the need for computing resources and higher network bandwidth. It is clear that, in this solution, the whole process has an impact on the Sender-Receiver communication delay.

The techniques known in the first group present the main drawback that it is not the recipient who actually generates the acknowledgment document or the receipt document, what is eventually not satisfactory since the involvement of the recipient in the generation of the electronic proof is highly desirable.

In parallel to the TTP based techniques of the first group, one can observe the existence of a second group where the TTP does not transmit to the emitter the receipt but, conversely, stores one document used as a proof in an archive database. This entails the problem of the security and maintenance of such a database.

Therefore, it can be seen that the known techniques using a TTP are not yet satisfactory. Further it should be observed that all known TTP based techniques imply that the TTP is capable of receiving and transmitting the electronic documents which are to be delivered to their recipients, what results in a huge level of traffic which is to be handled by the TTP.

Therefore there is a wish for an enhanced NRR protocol, based on a TTP, minimizing the impact of the transaction or the mail on that TTP, and which arranges a secure electronic transaction or delivery of a message permitting the emitter to receive an electronic proof of the good delivery of the document generated by the receiver.

**Summary of the invention**

It is an object of the present invention to provide a secure NRR protocol, which provides the originator of a document with an effective electronic acknowledgment document of the transaction, or of the delivery of the electronic document.

It is another object of the present invention to design a new electronic mail software which is fitted with an automatic Non-Receipt-Repudiation facility.

It is a further object of the present invention to provide an enhanced Trusted Third Party which can secure the transmission of the electronic documents and messages throughout a telecommunication network.

It is still another object of the present invention to provide a format of an electronic document or envelope which can be used by a NRR mechanism.

The invention is based on the use of a protocol between the emitter, the receiver and a Trusted Third Party (TTP) which is based on the transmission to the receiver of a first envelope which comprises an encrypted version of the message or document, a hash function of said message, and a Validation Certificate (VC) creating an unique link between said message M, said key K and said emitter.

More specifically, the protocol involves the steps of:

a) transmitting a first envelope or electronic document from the emitter to the receiver, said first envelope including a first, a second, a third, a fourth and a fifth element;

- said first element consisting of an optional identifier (H1);
- said second element consisting of an encrypted form of said document or message $[M]_k$,
- said third element consisting of the hashing of said message or document M;
- said fourth element consisting of the combination of said key K with said third element prior to the encryption with the public key of said TTP;
- said fifth element comprising of a Validation Certificate (VC) consisting of a signature of said emitter which is used for creating an unambiguous link between the original message M and the key K chosen and used by the originator for encrypting this message before the latter is transmitted to the recipient;

b) receiving and processing of said first envelope by said receiver, said processing involving the steps of:

- verifying said Validation Certificate by verification of the signature of said sender;
- transmitting to said TTP server a second envelope including the signature of said receiver to said Validation Certificate (VC);

c) reception and processing by said TTP server of said second envelope, said processing involving the steps of:

- checking said Validation Certificate (VC);
- checking said RC Certificate;
- decrypting and transmitting said key K included within said fourth element to said receiver;
- transmitting said RC certificate to said emitter.

Preferably, the first envelope comprises the following elements:
H1, $[M]_k$ , h(M), $[K, h(M)]_{PK.TTP}$ and VC.
Wherein :

- H1: is an optional message identifier which is used for identifying the message in the protocol;
- $[M]_k$ is the encryption of the original message M by means of a symmetric encryption algorithm and a secret encryption key K;
- h(M) is the result of a secure hash function computed on the electronic message or document M;
- $[K, h(M)]_{PK.TTP}$ is encrypted by means of the public key of said TTP server; and

- VC being given by the following formula:

$$VC = Sign.Sender ( H2, h([M]_k ), h(M) , [K, h(M)]_{PK.TTP} )$$

with
- H2: being an optional message identifier which is used for identifying the particular VC;
- $h([M]_k )$ being the hashing of the encrypted form of the original message M with the secret K;
- h(M) being the result of a secure hash function computed on the electronic message M.
- $[K, h(M)]_{PK.TTP}$ being encrypted by means of the public key of said TTP server.

When the first envelope or electronic document is received by the receiver, the latter performs the steps of:

a) validating said VC certificate based on the following steps:

- extracting (41) $[M]_k$ from said first envelope;
- applying (42) a hashing function for the purpose of computing $h([M]_k )$.
- extracting (43) h(M) and $[K, TTP]_{pkTTP}$ from the first envelope.
- forming the pattern H2, $h([M]_k$, h(M) and $[K, h(M)]_{PK.TTP}$ and;
- verifying (45-47) the signature of Validation Certificate applied to said pattern and, accordingly generating a RC certificate which is transmitted to said TTP;

b) generating (24) a second envelope comprising a first, a second, a third and a fourth element;

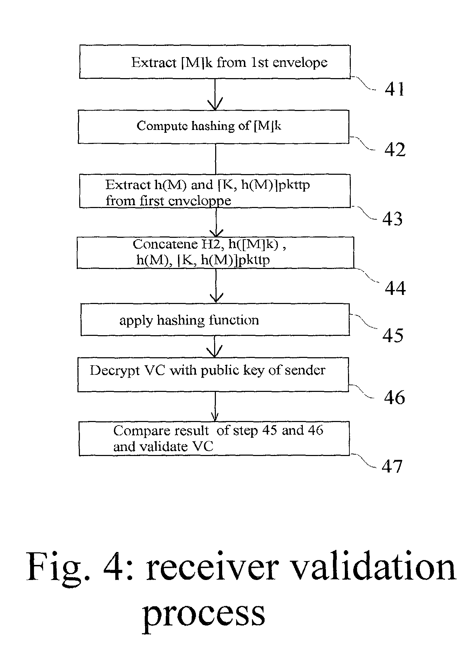

- said first element of said second envelope consisting in Receipt Certificate (RC) encrypted with the public key of said TTP server,
- said second element of said second envelope consisting $[K, h(M)]_{pkTTP}$ extracted from said first envelope and particularly used in step 43 of figure 4.
- said third element of said second envelope consisting of $h([M]_k$ which was computed in step 42 of figure 4.
- said fourth element of said second envelope consisting of said VC Validation Certificate.

In a preferred embodiment, the Receipt Certificate (RC) is defined as follows:

$$RC = Sign.Receiver ( H3, h(M), VC)$$

wherein $H_3$ is an optional message identifier which is used for identifying the message in the protocol.

When the TTP server receives the second envelope, it performs the steps of:

a) validating said VC certificate by performing the steps of:

- decrypting (51) $[K, H(M)]_{PKTTP}$ received in said second envelope;
- forming (52) $h([M]_k$ , h(M) and $([K, H(M)]_{PKTTP} )$ and associate the latter to the optional identifier H2 in order to constitute a whole bit pattern; and
- verifying (53, 54, 55) the signature of said VC certificate on said whole bit pattern;

b) validating said RC certificate by performing the steps of:

- decrypting (61) said first element of the second envelop received from the receiver,
- forming (62) a bit pattern formed of optional element H3, optional element H(M) and the VC certificate;
- verifying the signature of RC on said bit pattern H3, H(M), VC and,

c) transmitting (28) the contents $[K]_{PK.TTP}$ of the key K to said receiver, once encrypted with the public key of said receiver;

d) transmitting (29) to said emitter optionally encrypted with the public key of said sender.

The invention also provides an electronic mail software which incorporates a special icon or menu item or dialog check box which, upon actuation, automatically generates the first envelope and transmits it to the receiver. Upon the reception of said first envelop, the electronic mail software automatically performs the validation steps of the receiver and automatically creates and transmits the second envelope to the TTP server containing the Receipt Certificate.

Therefore, there is provided an effective mail transmission system which allows the Originator of one document to ascertain that the recipient of said document actually received that document.

There is at last provided a Trusted Third Party server which is specifically arrange to receive and process the said second envelope for the purpose of, on one hand, transmitting the key K to said receiver and an adequate RC certificate to the Originator of said document.

At last, the invention provides a format for a self-NRR envelope or electronic document which can be used for securing the transmission of messages or documents to a recipient.

In one embodiment, the self-NRR envelope complies with the following format:

[ M, RC, K, VC, publicKey.TTP].

where M is an original message or document transmitted by an originator to a receiver; RC is a Receipt Certificate provided by said receiver, K is a encryption key, VC is a Validation Certificate carrying the signature of said originator and publicKey.TTP is a public key associated to said TTP server.

In an alternative embodiment, the self-NRR envelope complies with the following format:

[ M, RC, VC , $[M]_k$ ,[K, h(M)]$_{PK.TTP}$ ]

where M is an original message or document transmitted by an originator to a receiver;

RC is a Receipt Certificate provided by said receiver,

VC is a Validation Certificate carrying the signature of said originator

$[M]_k$ being the encrypted form of the original message M with the secret K ;

h(M) being the result of a secure hash function computed on the electronic message M.

[K, h(M)]$_{PK.TTP}$ being encrypted by means of the public key of said TTP server.

## Description of the drawings

An embodiment of the invention will now be described, by way of example only, with reference to the accompanying drawings, wherein:

Figure 1 illustrates the typical environment of use of the present NRR protocol.

Figure 2 is a flow chart illustrate the generation and the checking of the Receipt protocol.

Figure 3 is a flow chart summarizing the different messages exchanged between party A, party B and the TTP server.

Figure 4 is a flow chart illustrating the receiver validation process of the VC.

Figure 5 and 6 are flow charts illustrating respectively the first and second validation processes of the TTP server.

Figure 7 illustrates the so-called public RC validation process for checking the correspondance between the RC certificate generated by a receiver with a encrypted message transmitted to the same receiver.

Figure 8a and 8b illustrate two embodiments of an electronic envelope which can be used and archived and which is arranged to provide the automatic " Notice of Reception" of the present invention.

## Description of the preferred embodiment of the invention

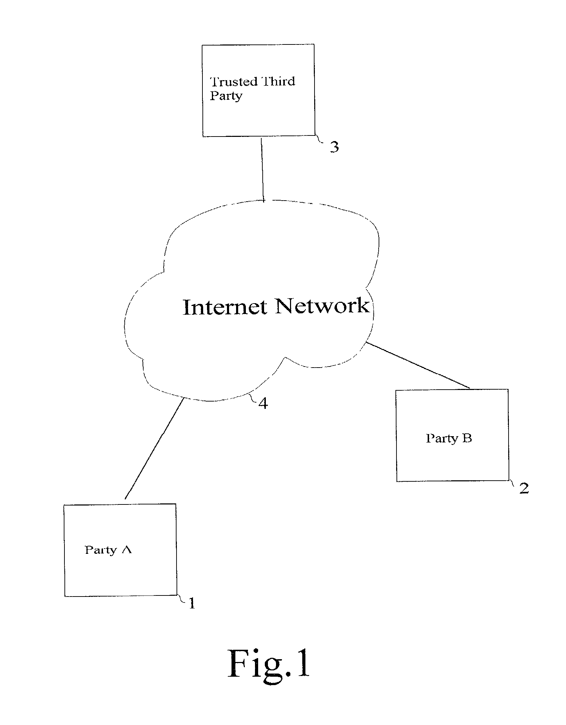

Figure 1 shows a typical environment where the invention can be used with benefits. Two different parties are assumed to have a first party 1 (A) - for instance the originator of an electronic mail or transaction document is connected via appropriate connection means to the Internet network 4, and communicates with a second party 2 (B). A third element 3, referred to as a Trusted Third Party (T.T.P.) is also connected to the Internet network 4 and serves as a server for securing the transaction between the originator and the recipient of the document as will be shown below. While the invention will be particularly described in reference with the electronic mail - which is clearly the first substantial application of NRR techniques, it should be clear that the process which is described below can be used for securing the electronic transactions throughout a telecommunication network in general, and the Internet network in particular

In the preferred embodiment of the invention, each party A or B is assumed to be fitted with an electronic mail facility, such as Outlook Express ™ from Microsoft Inc. for instance. Further, each party is fitted with a pair of private and public encryption keys and the public key of any party is assumed to be certified by a certificate which can be validated by any other party by means of an appropriate security mechanism. At least each party is equipped with elementary security mechanisms, such as used for performing encryption, digital signature and hashing operations. Such elementary security techniques are well known to the skilled man and will not be further elaborated. Additional information concerning asymmetrical encryption techniques and the use of hashing and digital signature can be found in the literature.

It will now be described how the above mentioned elementary security techniques - hashing, signature generation and validation - can be combined in an efficient manner for the purpose of elaborating a complete and secured NRR protocol, based on a TTP server 4, and which minimizes the traffic to be handled by said TTP server 3.

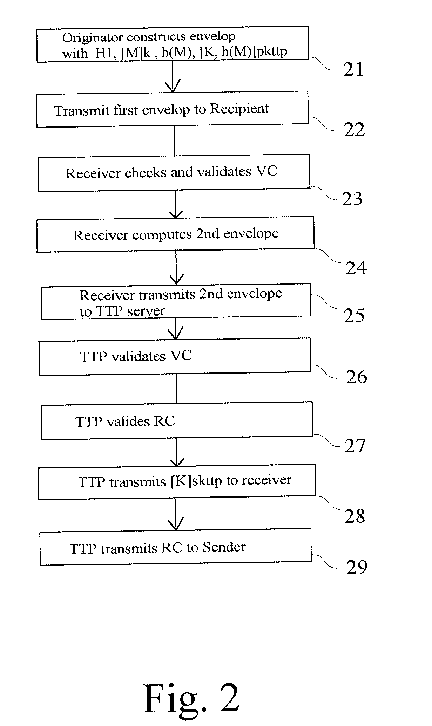

Figure 2 more particularly illustrates the process of accompanying the transmission of an electronic message or document M from originator A to Recipient B and the exchange of information between the different entities. The particular format of the message M which is to be transmitted by means of the enhanced NRR protocol may vary in accordance with the particular application being considered since the latter closely depends on the underlying communication system. The message M can be in binary form or alternatively, can comply with the well known Base64 encoding format used for electronic mail. In the NRR protocol which is hereinafter described, the transmission of the message M to the recipient B is accompanied with an exchange of security messages with the TTP server 3 and a set of validation procedures is executed prior to the generation to the originator A of an official electronic document, a so-called Receipt Certificate (RC) which may be used by the latter as or a "notice of good receipt" demonstrating the actual reception of the message M by the recipient or receiver B.

The NRR protocol starts with a step 21 wherein the electronic mail software facility of the originator of the message M - hereinafter called the sender - constructs a first electronic envelope including the following elements: H1, $[M]_k$ , h(M), $[K, h(M)]_{PK.TTP}$ and VC.

Wherein :

H1: is an optional message identifier which is used for identifying the message in the protocol;

$[M]_k$ is the encryption of the original message M by means of a symmetric encryption algorithm such as Data Encryption Standart (D.E.S.) for instance, and a secret encryption key K which is randomly generated by the sender for this particular message;

h(M) is the result of a secure hash function such as SHA1 for instance, computed on the electronic message M.

$[K, h(M)]_{PK.TTP}$ is encrypted by means of the public key of TTP server 3;
And
VC consists in a Validation Certificate which is used for creating an unambiguous link between the original message M and the key K chosen and used by the originator for encrypting this message before the latter is transmitted to the recipient. In one preferred embodiment of the invention, the Validation Certificate VC is equal to the signature from the Sender - i.e. party A - on the following elements indicated below:
VC = Sign.Sender ( H2, $h([M]_k)$ , h(M), $[K, h(M)]_{PK.TTP}$ )
with
H2: being an optional message identifier which is used for identifying the particular VC;
$h([M]_k)$ being the hashing of the encrypted form of the original message M with the secret K ;
h(M) being the result of a secure hash function such as SHA1 for instance, computed on the electronic message M.
$[K, h(M)]_{PK.TTP}$ being encrypted by means of the public key of TTP server 3;

As known by the skilled man, the signature process permits to affix to one given document a signature . The signature of a an electronic document is computed in two steps: first a hash function is applied to the document to compute a fixed length hash value, then the hash value is encrypted under the private key of the signer and the result of this encryption is the digital signature of the document

The invention is particular adapted to the use of an electronic mail software such as Outlook Express (TM) for instance. Indeed, it can be seen that the creation of the first envelope can be easily and automatically achieved by adding a special plug-in software displaying a specific and additional icon which, upon actuation by the user, automatically causes the construction of this first envelope and embeds the latter into a MIME message in order to provide the Notice of Receipt or the Receipt Certificate as described hereinafter

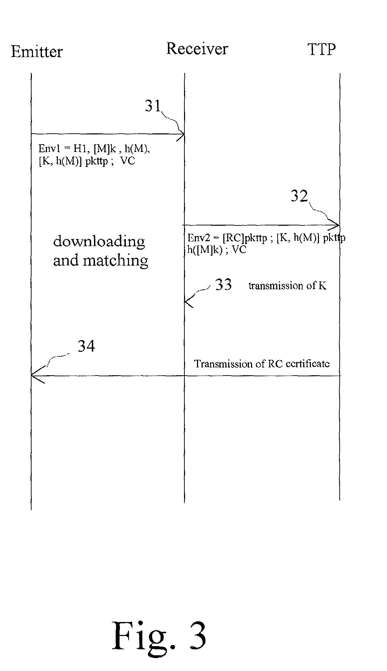

In a step 22, the first envelope is transmitted from the Sender to the receiver, such as illustrated by arrow 31 in figure 3. This is performed by any known technique which will not be further elaborated.

When the recipient B receives the first envelope, it starts in a step 23 a validation process of the VC field incorporated within the first envelope. The particular validation process by the receiver is illustrated in figure 4 and comprises the following computation steps:

in a step 41, the Receiver extracts the $[M]_k$ from the first envelope and, in a subsequent step 42 it applies a hashing function to it for the purpose of computing $h([M]_k)$.

In a step 43, the receiver extracts h(M) and $[K, TTP]_{pkTTP}$ from the first envelope.

In a step 44, the receiver concatenates H2 - which is a predefined value stored within the memory of the computer - with the element $h([M]_k$ computed in step 41 and the two elements h(M) and $[K, h(M)]_{PK.TTP}$ which were extracted from the envelope in step 43. This results in a binary pattern to which the receiver applies a hashing function in a step 45.

In a step 46, the receiver decrypts the VC received within the first envelope with the public key of the sender.

In a step 47, the receiver compares the decrypted value of VC with the result of the computation performed in step 45. If the two values are equal, the VC is then being validated.

Referring back to figure 2 again, when the VC value has been validated by the receiver, the latter computes in a step 24 a second envelope which, in the preferred embodiment, contains the four following elements:

A first element of the 2nd envelope consists in a Receipt Certificate (RC) encrypted with the public key of the TTP server 4. Preferably, the RC certificate is the signature of the Receiver on the elements defined as in the following:

$$RC = Sign.Receiver ( H3, h(M), VC)$$

wherein

H3 is an optional message identifier which is used for identifying the message in the protocol.

While the VC field shows to be compulsory for generating the RC certificate, it should be observed that, in an alternate embodiment, h(M) can be omitted.

The second envelope generated by the receiver contains the element $[K, h(M)]_{pkTTP}$ which was extracted from the first envelope and particularly used in step 43 of figure 4.

The second envelope further comprises $h([M]_k$ which was computed in step 42 of figure 4.

At last, the second envelope comprises the VC certificate received from the sender.

While only the first two elements are being encrypted with the public key of the TTP server, it should be observed that, in an alternative embodiment, all the four elements could be encrypted for the purpose of increasing the level of security of the mechanism. Further, when the four elements are prepared, the receiver prepares the construction of an electronic message complying with for instance the known MIME format. The receiver then transmits the second envelope to the TTP server 3 in a step 25 of figure 2, such transmission being also illustrated by arrow 32 in figure 3.

As mentioned above, the transmission of the second envelope may follow the known technique of transmission of electronic mail. It can be seen that the known electronic mail facilities can be easily adapted to incorporate the protocol of the present invention. Further, it should be observed that, since the second envelope does not contain the original message, but only a hashed image of the encrypted message M, the size of this second envelope is particularly reduced, thereby correspondingly reducing the amount of the traffic to be handled by the TTP server 3. This shows to be a substantial advantage in comparison to the known techniques. The protocol herein disclosed therefore advantageously deviates from the traditional approach of enclosing within the same envelope a document and a signature corresponding to that document M. In the invention, the VC certificate does not correspond to the original message being encrypted $[M]_k$ (contained within the first envelope), but only to the digest form which is $h([M]_k$.

When the second envelope is received by the TTP server 3, the latter stores within its internal (not shown) memory the four elements therein included and then initiates a set of validation steps for the purpose of successively validating the VC certificate in a step 26 and the RC certificate in a step 27.

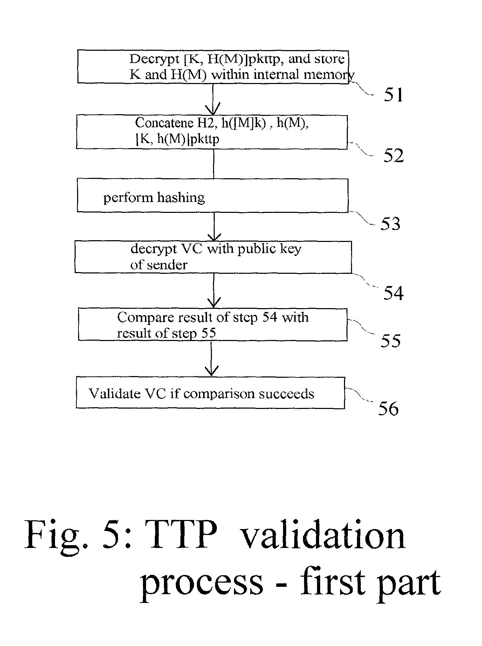

The validation of VC certificate will more particularly described in reference to figure 5.

In a step 51 the TTP server 4 decrypts $[K, H(M)]_{PKTTP}$ received in the second envelope and stores K and H (M) in its (not shown) memory.

In a step 52, the TTP server 4 concatenes the value of H(M) computed and stored in step 51 with the second $([K, H(M)]_{PKTTP}$) and third $(h([M]_k)$ element that was contained within the second envelope received from the receiver and stored within the internal memory after its reception. The TTP server 3 then concatenates the three elements with

the predetermined identifier $H_2$ (which is assumed known as it is a fixed element within the protocol) in order to constitute a whole bit pattern and then, in a step 53, computes the hashing of that whole bit pattern.

In a step 54, the TTP server 3 decrypts the VC certificate with the public key of the sender and, in a step 55, the result of said decrypting is compared with the result of the hashing operation of step 53.

If the two values show to be equal, then the TTP validates the VC certificate and, conversely the process is completed and the sender will not receive the RC certificate.

With respect to figure 2 again, it can be seen that when the validation of the VC certificate completes, the TTP server 4 then initiates a second validation process for testing the RC certificate.

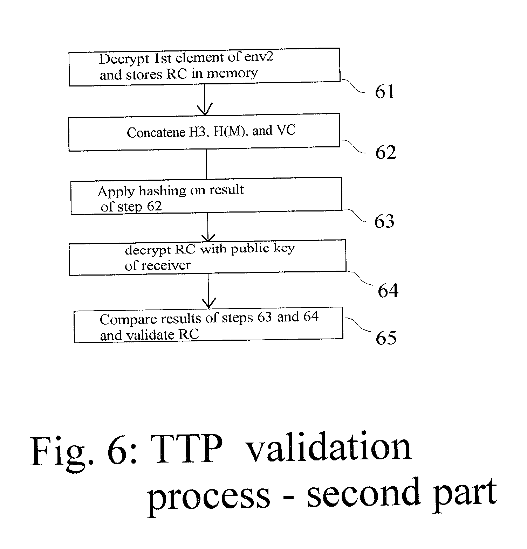

The RC validation process will now be more particularly described in reference with figure 6.

The validation of the RC certificate first starts in a step 61 with the decryption of the first element of the second envelop received from the receiver, that is $[RC]_{pkTTP}$. The RC certificate is then stored within the internal memory of the TTP.

In a step 62 , the TTP server then concatenates to the predetermined identifier $H_3$, the contents of H(M) which was stored in step 51 of figure 5, with the VC certificate which was validated before. In the alternate embodiment where the H(M) (and possibly $H_3$ identifier) is omitted within the RC certificate, then step 62 is reduced to the extraction of VC certificate.

In a step 63 the TTP servers then applies a hashing to the whole bit stream and, in a step 64, the RC certificate is decrypted with the public key of the receiver.

The two resulting values of steps 63 and 64 are then compared in a step 65 and if the comparison succeeds, then the validation of the RC certificate is considered as positive.

Referring back to figure 2, it can be seen that after the completion of the validation of the RC certificate, the TTP server then transmits in a step 28 the contents $[K]_{PK.TTP}$ of the key K to the receiver, once encrypted with the public key of the latter. This is illustrated in figure 3 by arrow referenced 33.

In a step 29 the TTP server 3 then transmits the RC certificate to the sender, optionally encrypted with the public key of the latter. This is illustrated in figure 3 with arrow referenced 34.

It can be seen that the TTP server can arrange the transmission, in a secure fashion, of the electronic mail to the receiver of the Recipient, and provides the sender with a Receipt Certification which contains the personal signature of the receiver.

The process described above provides a guarantee for both the sender and the receiver.

On one hand, regarding the guarantee offered to the sender, it could be seen that the RC certificate includes the personal signature of the receiver, particularly on the VC certificate. The Recipient of the message M - corresponding to the VC certificate - should therefore be prevented from denying having received the electronic mail or document. Further, the validation process of the RC certificate performed by the TTP ensures that the key K is not transmitted to the receiver if the latter tries to incorporate a "wrong" RC certificate. (i.e. which does not correspond to the VC certificate provided by the Sender.

On the other hand, a very substantial guarantee is provided to the Recipient since the two validation processes performed by the TTP ensure that the key K used for decrypting the message M was clearly the one which was incorporated within the first envelope transmitted by the Originator. A very important advantage results from this in the particular case where the key K does not correspond, because of an error or a malevolent intention of the Originator, to the encryption process of M having resulted to the $[M]_k$ message. In this situation, it is clear that the receiver can not decrypt the document or message M by means of the K received from the TTP server in step 28. However, since the first envelope and particularly the VC certificate contains an unambiguous link between the key K and the encrypted message $[M]_k$ it is clear that the receiver will be capable of demonstrating that the Originator enclosed in the first envelope an encrypted message associated with a wrong key.

In addition to the guarantees mentioned above, it should be noticed that the use of a Validation Certificate (VC) which is the signature of the Sender A on the elements which do not include the message M (which can be large) or the encrypted form of that message M but only the hashing of those elements permits to reduce the size of the data to be handled by the TTP server. This is a substantial advantage in comparison with the known techniques which require a TTP server arrange to handle a huge traffic of data. Costs reduction can then be contemplated for embodying the TTP server.

It will now be described the process for validating the RC certificate in case of litigation or dispute between the Originator of the document and the Recipient, or simply when the Recipient denies having received the document. This validation process is opened to any third party who finds an interest in establishing a link between the RC certificate and the encrypted message which was transmitted by the Originator of the document. Clearly, this validation mechanism - referred to a "public" validation process since it is open to any third party - is different from the one executed by the TTP server which was described above in reference to figure 6.

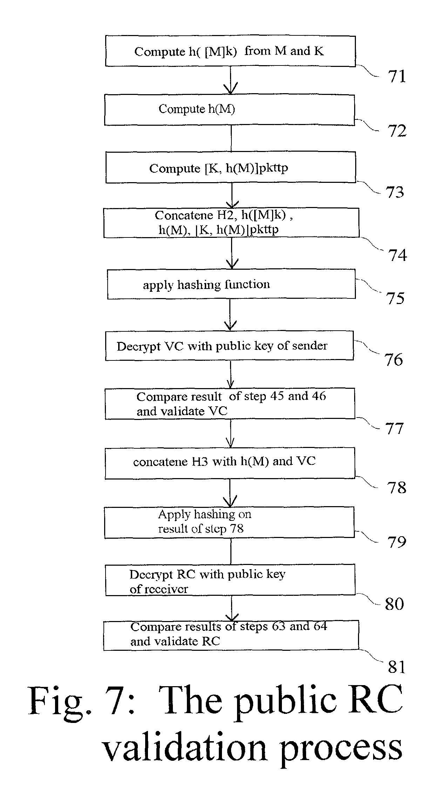

The so-called public RC validation process is illustrated in figure 7 and requires that the sender submits, in addition to the RC certificate and the public key of the TTP server 3, the original message M and the encryption k used

for generating $[M]_k$ as well as the VC certificate.

The public RC validation process successively performs the validation of the VC and the validation of the RC.

In a step 71, the process encrypts the original message (assumed to be known since the latter is provided by the Originator wishing to establish the actual receiving of the message by the Recipient) with the encryption key K in order to compute the element h($[M]_k$).

In a step 72, the process uses M for the purpose of computing h(M):

In a step 73, the process computes ($[K, H(M)]_{PKTTP}$ and encrypts the result with the known public key of the TTP server 3.

In a step 74, the public RC validation process concatenes $H_3$ with the element h($[M]_k$ computed in step 71 and the two elements h(M) and $[K, h(M)]_{PK.TTP}$ which were respectively computed in step 72 and 73.

This results in a binary pattern to which the process applies a hashing function in a step 75.

In a step 76, the receiver decrypts the VC submitted by the Originator;

In a step 77, the receiver compares the decrypted value of VC with the result of the computation performed in step 75. If the two values are equal, the VC is then being validated and the process proceeds further with the validation of RC in a step 78. If the two values are not equal, the publication validation process of the RC certificate aborts.

In a step 78 the process concatenes $H_2$ identifier with h(M) and the validated VC certificate. In the alternative embodiment where $H_3$ and h(M) are omitted, the process only considers the VC certificate.

In a step 79 the process applies a hashing on the result of step 78, that is computes h($H_3$, h(M), VC).

In a step 80, the process decrypts the RC certificate with the known public key of the receiver.

In a step 81, the process then compares the results of step 79 and 80 and validates or not the RC certificate. If the step 81 shows an equality, the RC certificate is established what demonstrates that the recipient received the encrypted message $[M]_k$ in an envelope containing a key K. A very interesting aspect is derived from the mechanism described above: in the case where the Originator of the message has incorrectly incorporated a "wrong" key K in the first envelop, thereby causing the Recipient to receive an encrypted message which he/she could not read, the recipient will therefore easily establish the error and thus solve the litigation or the dispute.

It should be noticed that, in one particular embodiment, the electronic mail facility software can be adapted for automatically testing the RC certificate upon its reception. The process of validation of the RC by the sender, while it basically follows the steps defined above in the general "public " validation process, shows to be quite easy to embody since there is no need to compute the VC certificate because the latter is normally already stored within the memory of the computer A. By means of combining the transmission of the first envelope with the automatic validation process of the RC resulting from the processing of said first and second envelopes by the receiver and the TTP, one can see that the emitter can automatically receive and check the RC certificate and store it with the original message for the purpose of constituting an archive file which may be used for demonstrating, if necessary, the actual reception of the message by the Recipient.

In one embodiment, the mail software facilities produces a third envelope fitted to offer "notice of reception" capacity - a so called self-NRR validation format, which can be easily archived by the Originator of the electronic document or message.

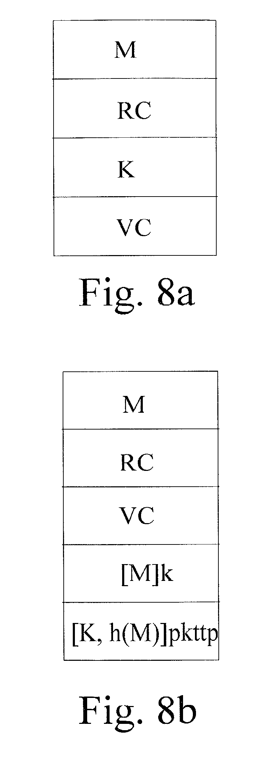

A first embodiment of such a self-NRR validation envelope is shown in figure 8A where it can be seen that this third envelope contains the following elements:

[ M, RC, K, VC , publicKey.TTP].

The public validation process of the RC described above in reference with figure 7 can directly be applied for certifying this third envelope.

Alternatively, a second embodiment of a self-NRR validation envelope is given in the following:

[ M, RC, K, VC, $[M]_k$ ,$[K, h(M)]_{PK.TTP}$ ]

It can be seen that in this second embodiment of the third envelope the key K is no longer necessary for the public validation process since the latter can be based on the direct use of $[M]_k$ instead of the key K, at the cost however of a higher size since the encrypted file $[M]_k$ has a comparable size with respect to the original document M.

## Claims

1. Process for generating a Non-Receipt-Repudiation (N.R.R.) or receipt certificate (RC) for a electronic document or message transmitted from an emitter to a receiver under the control of a Trusted Third Party, said emitter, said receiver and said TTP communicating via a telecommunication network and being fitted with digital signature, hashing function a a pair of public/private keys,

   **characterized in that** it is based on a protocol involving the transmission to the receiver of a first envelope which comprises an encrypted version of the message or document, a hash function of said message, and a Validation Certificate (VC) creating an unique link between said message M, said key K and said emitter.

**2.** Process according to claim 1 **characterized in that** said protocol involves the steps of:

a) transmitting a first envelope or electronic document from the emitter to the receiver, said first envelope including a first, a second, a third, a fourth and a fifth element;

- said first element consisting of an optional identifier (H1);
- said second element consisting of an encrypted form of said document or message $[M]_k$,
- said third element consisting of the hashing of said message;
- said fourth element consisting of the combination of said key K with said third element prior to the encryption with the public key of said TTP;
- said fifth element comprising of a Validation Certificate (VC) consisting of a signature of said emitter which is used for creating an unambiguous link between the original message M and the key K chosen and used by the originator for encrypting this message before the latter is transmitted to the recipient;

b) processing the received envelope within said receiver, said processing involving the steps of:

- verifying said Validation Certificate by verification of the signature of said sender;
- transmitting to said TTP server a second envelope including the signature of said receiver to said Validation Certificate (VC);

c) processing said second envelope by within said TTP server, said processing involving the steps of:

- checking said Validation Certificate (VC);
- checking said RC Certificate;
- decrypting and transmitting said key K included within said fourth element to said receiver;
- transmitting said RC certificate to said emitter.

**3.** Process according to claim 2 wherein the first envelope comprises:
H1, $[M]_k$ , h(M), $[K, h(M)]_{PK.TTP}$ and VC.
Wherein :

- H1: is an optional message identifier which is used for identifying the message in the protocol;
- $[M]_k$ is the encryption of the original message M by means of a symmetric encryption algorithm and a secret encryption key K;
- h(M) is the result of a secure hash function computed on the electronic message or document M;
- $[K, h(M)]_{PK.TTP}$ is encrypted by means of the public key of said TTP server; and
- VC being given by the following formula:

$$VC = Sign.Sender ( H2, h([M]_k ), h(M) , [K, h(M)]_{PK.TTP} )$$

with

- H2: being an optional message identifier which is used for identifying the particular VC;
- $h([M]_k )$ being the hashing of the encrypted form of the original message M with the secret K;
- h(M) being the result of a secure hash function computed on the electronic message M.
- $[K, h(M)]_{PK.TTP}$ being encrypted by means of the public key of said TTP server.

**4.** Process according to claim 3 **characterized in that** said first envelope is processed by said receiver in accordance with the following steps:

a) validating said VC certificate based on the following steps:

- extracting (41) $[M]_k$ from said first envelope;
- applying (42) a hashing function for the purpose of computing $h([M]_k )$.
- extracting (43) h(M) and $[K, TTP]_{PkTTP}$ from the first envelope.
- forming the pattern H2, $h([M]_k , h(M)$ and $[K, h(M)]_{PK.TTP}$ and;
- verifying (45-47) the signature of Validation Certificate applied to said pattern and, accordingly generating a RC certificate which is transmitted to said TTP;

b) generating (24) a second envelope comprising a first, a second, a third and a fourth element;

- said first element of said second envelope consisting in Receipt Certificate (RC) encrypted with the public key of said TTP server,
- said second element of said second envelope consisting [K, h(M)]$_{pkTTP}$ extracted from said first envelope and particularly used in step 43 of figure 4.
- said third element of said second envelope consisting of h([M]$_k$ which was computed in step 42 of figure 4.
- said fourth element of said second envelope consisting of said VC Validation Certificate.

5. Process according to claim 4 wherein said Receipt Certificate is defined as follows:

$$RC = Sign.Receiver ( H3, h(M) , VC)$$

wherein H3 is an optional message identifier which is used for identifying the message in the protocol.

6. Process according to claim 5 **characterized in that** the processing of said second envelope by TTP server involves the steps of:

a) validating said VC certificate by performing the steps of:

- decrypting (51) [K, H(M)]$_{PKTTP}$ received in said second envelope;
- forming (52) h([M]$_k$ , h(M) and ([K, H(M)]$_{PKTTP}$ ) and associate the latter to the optional identifier H2 in order to constitute a whole bit pattern; and
- verifying (53, 54, 55) the signature of said VC certificate on said whole bit pattern;

b) validating said RC certificate by performing the steps of:

- decrypting (61) said first element of the second envelop received from the receiver,
- forming (62) a bit pattern formed of optional element H3, optional element H(M) and the VC certificate;
- verifying the signature of RC on said bit pattern H3, H(M), VC and,

c) transmitting (28) the contents [K]$_{PK.TTP}$ of the key K to said receiver, once encrypted with the public key of said receiver;

d) transmitting (29) to said emitter optionally encrypted with the public key of said sender.

7. Validation process of the Receipt Certificate (RC) generated by the process according to anyone of the preceding claims, **characterized in that** it involves the steps of:

a) validating said VC certificate by performing the steps of:

- encrypting (71) said message M with an encryption mechanism based on said key K in order to compute the element h( [M]$_k$).
- computing (72) h(M);
- computing (73) ([K, H(M)]$_{PKTTP}$ by means of an encryption process based on the public key of said TTP server;
- forming (74) a bit pattern consisting of optional element H$_2$ , h([M]$_k$ h(M) and [K, h(M)]$_{PK.TTP}$ ;
- verifying (75, 76, 77) the signature of VC certificate on said bit pattern;

b) validating said RC certificate by performing the steps of:

- forming (78) the a bit pattern consisting of optional element H3, h(M) and VC validated in step a);
- verifying (79, 80, 81) the signature of RC on said bit pattern H3, h(M) and VC

8. Electronic mail software program for carrying out the process defined by anyone of the preceding claims, said program comprising

- means for displaying an icon which, upon actuation from a user, automatically generates said first envelope.
- means for causing a verification of said VC and said RC signatures upon the reception of one Receipt certificate.

9. Process for processing an electronic self -NRR electronic envelope or document comprising the following elements:
[ M, RC, K, VC , publicKey.TTP].
where M is an original message or document transmitted by an originator to a receiver; RC is a Receipt Certificate provided by said receiver, K is a encryption key, VC is a Validation Certificate carrying the signature of said originator and publicKey.TTP is a public key associated to said TTP server.

10. Process for processing an electronic self -NRR electronic envelope or document comprising the following elements:
[ M, RC, VC, $[M]_k$ ,$[K, h(M)]_{PK.TTP}$ ]
where M is an original message or document transmitted by an originator to a receiver;
RC is a Receipt Certificate provided by said receiver,
VC is a Validation Certificate carrying the signature of said originator
$[M]_k$ being the encrypted form of the original message M with the secret K;
h(M) being the result of a secure hash function computed on the electronic message M.
$[K, h(M)]_{PK.TTP}$ being encrypted by means of the public key of said TTP server.

Fig.1

Originator constructs envelop
with H1, [M]k , h(M), |K, h(M)|pkttp — 21

Transmit first envelop to Recipient — 22

Receiver checks and validates VC — 23

Receiver computes 2nd envelope — 24

Receiver transmits 2nd envelope
to TTP server — 25

TTP validates VC — 26

TTP valides RC — 27

TTP transmits [K]skttp to receiver — 28

TTP transmits RC to Sender — 29

# Fig. 2

Fig. 3

Extract [M]k from 1st envelope

41

Compute hashing of [M]k

42

Extract h(M) and [K, h(M)]pkttp
from first envcloppe

43

Concatene H2, h([M]k) ,
h(M), [K, h(M)]pkttp

44

apply hashing function

45

Decrypt VC with public key of sender

46

Compare result of step 45 and 46
and validate VC

47

# Fig. 4: receiver validation process

Decrypt [K, H(M)]pkttp, and store
K and H(M) within internal memory                51

Concatene H2, h([M]k) , h(M),
[K, h(M)]pkttp                                   52

perform hashing                                  53

decrypt VC with public key
of sender                                        54

Compare result of step 54 with
result of step 55                                55

Validate VC if comparison succeeds               56

# Fig. 5: TTP validation
# process - first part

```
Decrypt 1st element of env2
and stores RC in memory          61

Concatene H3, H(M), and VC       62

Apply hashing on result
of step 62                       63

decrypt RC with public key
of receiver                      64

Compare results of steps 63 and 64
and validate RC                  65
```

# Fig. 6: TTP validation process - second part

Compute h( [M]k) from M and K

71

Compute h(M)

72

Compute [K, h(M)]pkttp

73

Concatene H2, h([M]k) ,
h(M), |K, h(M)|pkttp

74

apply hashing function

75

Decrypt VC with public key of sender

76

Compare result of step 45 and 46
and validate VC

77

concatene H3 with h(M) and VC

78

Apply hashing on
result of step 78

79

Decrypt RC with public key
of receiver

80

Compare results of steps 63 and 64
and validate RC

81

Fig. 7:  The public RC
validation process

| |
|---|
| M |
| RC |
| K |
| VC |

# Fig. 8a

| |
|---|
| M |
| RC |
| VC |
| [M]k |
| [K, h(M)]pkttp |

# Fig. 8b

**European Patent Office**

## EUROPEAN SEARCH REPORT

Application Number

EP 01 48 0093

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LIEW C-C ET AL: "Non-Repudiation in an agent-based electronic commerce system" PROCEEDINGS. INTERNATIONAL WORKSHOP ON DATABASE AND EXPERT SYSTEMS APPLICATIONS, XX, XX, 1 September 1999 (1999-09-01), pages 864-868, XP002164806 * page 864, right-hand column - page 867, left-hand column * | 1-10 | H04L9/32 |
| D,A | DENG, GONG, LAZAR, WANG: "Practical Protocols for Certified Electronic Mail" JOURNAL OF NETWORK AND SYSTEMS MANAGAMENT, [Online] vol. 4, no. 3, 1996, XP002191499 Retrieved from the Internet: <URL:http://citeseer.nj.nec.com/cs> [retrieved on 2002-02-27] * the whole document * | | |

**TECHNICAL FIELDS SEARCHED (Int.Cl.7)**

H04L

The present search report has been drawn up for all claims

| Place of search | Date of completion of the search | Examiner |
|---|---|---|
| BERLIN | 27 February 2002 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)